Europäisches Patentamt

(19) European Patent Office

Office européen des brevets

(11) Numéro de publication: **0 219 416 B1**

## (12) FASCICULE DE BREVET EUROPEEN

(45) Date de publication de fascicule du brevet:
18.09.91

(21) Numéro de dépôt: 86402172.0

(22) Date de dépôt: 02.10.86

(51) Int. Cl.⁵: **A01K 97/04**, A01K 79/00,
A23K 1/18

(54) Procédé et composition pour attirer et retenir les poissons.

(30) Priorité: 03.10.85 FR 8514674

(43) Date de publication de la demande:
22.04.87 Bulletin 87/17

(45) Mention de la délivrance du brevet:
18.09.91 Bulletin 91/38

(84) Etats contractants désignés:
DE ES GB IT

(56) Documents cités:
AU-A- 251 218
FR-A- 582 224
FR-A- 2 561 871

CHEMICAL ABSTRACTS, vol. 101, no. 3, juillet 1984, page 512, résumé no. 22392k, Columbus, Ohio, US; K. HARADA et al.:
"Studies on the feeding attractants for fishes and shells. VII. Feeding attractants in
chemical constituents of lake prawn for
Oriental weatherfish", & NIPPON SUISAN
GAKKAISHI 1984, 50(4), 617-22

(73) Titulaire: **GROUPEMENT D'ETUDES ET DE RE-
CHERCHES NAVALES (G.E.R.N.)
Anse du Lin
F-29183 Concarneau(FR)**

(72) Inventeur: **Charbonnier, Jean-Paul
96, Avenue Victor Hugo
F-75116 Paris(FR)**
Inventeur: **De Passemar, Bernard
25 Bis, rue franklin
F-75116 Paris(FR)**

(74) Mandataire: **Mongrédien, André et al
c/o SOCIETE DE PROTECTION DES INVEN-
TIONS 25, rue de Ponthieu
F-75008 Paris(FR)**

DEV. AQUACULT. FISH. SCI., vol. 8, 1982, pages 275-291; A.M. MACKIE: "Identification of the gustatory feeding stimulants"

COMP. BIOCHEM. PHYSIOL., vol. 58A, 1977, pages 69-73, Pergamon Press, GB; W.E.S. CARR et al.: "Chemoreception in the pigfish, ORTHOPRISTIS CHRYSOPTERUS: the contribution of amino acids and betaine to stimulation of feeding behavior by various extracts"

CHEMICAL ABSTRACTS, vol. 93, no. 19, novembre 1980, page 530, résumé no. 184730n, Columbus, Ohio, US; L.A. TIMOSHINA et al.: "Use of synthetic nonprotein compounds in feeds for carp", & RYBN. KHOZ. (MOSCOW) 1980, (8), 33-5

EP 0 219 416 B1

**Description**

La présente invention a pour objet un procédé et une composition pour attirer et retenir les poissons.

De façon plus précise, elle concerne des compositions utilisables pour la pêche, qui permettent d'attirer et de retenir les poissons dans une zone d'un milieu aquatique en recréant dans cette zone des traces olfactives et/ou gustatives auxquelles sont sensibles les poissons à pêcher. On précise que dans le présent mémoire, on entend par poisson, tout animal qui vit dans l'eau salée, saumâtre ou douce, ce qui inclut les poissons proprement dits, les cétacés, les mollusques, les crustacés, etc...

Depuis des temps immémoriaux, certains pêcheurs utilisent différents procédés pour attirer et/ou retenir les poissons afin de les capturer plus facilement avec les apparaux divers bien connus (tels que filets, chaluts, sennes, hameçons, harpons, nasses, etc...) des techniques de pêche classique. Ces procédés peuvent mettre en oeuvre des "leurres" visuels, lumineux, acoustiques et/ou vibratoires, ou des "appâts" préparés à partir de matières synthétiques et/ou naturelles et destinés à faire croire à la présence de nourriture.

Ces dernières années, on a développé la technique des appâts synthétiques en essayant de reconstituer artificiellement la chair des poissons servant habituellement de proies aux poissons à pêcher. Dans ce but, des études ont été effectuées récemment par A. D. F. JOHNSTONE et A.M. MACKIE sur la possibilité d'utiliser, comme appât, des produits à base de caséine auxquels on a ajouté une préparation d'encornet synthétique. Les travaux réalisés jusqu'à présent n'en sont qu'au stade du laboratoire et ont porté plus particulièrement sur le comportement du poisson vis-à-vis de telles nourritures qui lui sont présentées en aquarium. La préparation d'encornet synthétique utilisée a été élaborée en partant d'analyses effectuées sur des tissus d'encornets. Cette préparation comprend de nombreux constituants : 17 acides aminés différents, de la bétaïne, du chlorhydrate de bétaïne, du chlorhydrate d'oxyde de triméthylamine, du chlorhydrate de triméthylamine, de l'hypoxanthine, de l'inosine, du monophosphate d'adénosine et de l'acide lactique. Les essais de laboratoire effectués sur la morue ont permis de vérifier que la présence d'une fraction lipidique dans cette nourriture pour poissons n'était pas essentielle car les morues consommaient autant de nourriture avec ou sans lipides. (Voir Communications de A.D.F. JOHNSTONE et A.M. MACKIE : "Investigations of bait acceptance by the Cod, Gadus morhua L." effectuées à la conférence de Bergen, 28 mai-31 mai 1985).

De telles compositions ont l'inconvénient de comporter un nombre important de constituants. Par ailleurs, comme les auteurs l'indiquent, l'efficacité de ces compositions en mer reste à explorer, car il n'est pas certain qu'elles puissent attirer des poissons se trouvant à plusieurs dizaines, voire plusieurs centaines de mètres. En outre leur stabilité dans le temps est incertaine.

Une autre étude de A M. Mackie dans Dev. Aquacult. Fish. Sci. 8, (1982), 275-291, a montré que les acides aminés, les acides aminés sous forme de chlorhydrate, les amines, le chlorure d'ammonium et l'acide lactique sont des constituants d'extraits de calamars ou de moules, efficaces pour attirer les poissons.

Depuis longtemps, comme l'indique le brevet français fR-A-582 224, on sait que l'ammoniaque et la triméthylamine ont un pouvoir d'appât sur les poissons. Cependant, bien que ces composés aient une action sur les poissons, ils ne permettent pas de les attirer et de les retenir de façon efficace.

On sait également, comme il est indiqué dans CA 101, 552 (1984), résumé n° 22392k, que les acides aminés, les bases volatiles et l'ammoniac qui sont les constituants d'une crevette de lac, ont un effet attractif sur un poisson oriental.

Cependant, jusqu'à présent, il n'existe aucune composition permettant d'assurer avec une efficacité suffisante le regroupement des poissons dans une zone du milieu aquatique où l'on pourra ensuite les pêcher aisément.

La présente invention a précisément pour objet un procédé et une composition pour attirer et retenir les poissons, qui présente une bonne efficacité à plusieurs centaines de mètres et qui a l'avantage de ne comporter que quelques constituants et d'être peu onéreuse à réaliser et de bien se conserver.

La composition selon l'invention pour attirer et retenir les poissons dans une zone d'un milieu aquatique consiste en un mélange actif constitué par :

- au moins un élément actif choisi dans un premier groupe comprenant les monoalkyl amines, les dialkyl amines, les trialkyl amines, les polyamines et leur oxydes,
- au moins un élément actif choisi dans un deuxième groupe comprenant les acides aminés, l'urée et les amides de formule $R\text{-}CO\text{-}NH_2$ dans laquelle R représente un atome d'hydrogène, un radical alkyle ou le radical $CH_3\text{-}CHOH$ ;
- éventuellement de l'ammoniac ; et
- éventuellement au moins un élément actif choisi dans un troisième groupe comprenant l'acide

3

chlorhydrique, l'acide bromhydrique, l'acide iodhydrique, l'acide sulfurique, l'acide phosphorique, l'acide formique, l'acide myristique, l'acide lactique, l'acide butyrique, l'acide acétique et l'acide caproïque ; l'élément du troisième groupe et/ou les acides aminés du deuxième groupe pouvant être combinés au moins en partie avec l'ammoniac sous la forme de sel d'ammonium, et les acides chlorhydrique, bromhydrique, iodhydrique, sulfurique et phosphorique du troisième groupe pouvant être combinés au moins en partie avec les amines et/ou les acides aminés et être présents de ce fait dans le mélange actif sous la forme de chlorhydrate, de bromhydrate, d'iodhydrate, de sulfate et/ou de phosphate d'amine ou d'acide aminé ;

le mélange actif comprenant de l'ammoniac lorsque l' élément du premier groupe est une trialkyl amine, le mélange actif comprenant au moins un élément actif du troisième groupe lorsque l'élément actif du deuxième groupe est un acide aminé, le ou les éléments actifs appartenant au premier groupe représentant au moins 5% en mole du mélange actif, le ou les éléments actifs appartenant au deuxième groupe représentant au moins 5% en mole du mélange actif, et l'ammoniac représentant au plus 80% en mole du mélange actif.

Le procédé de l'invention pour attirer et retenir les poissons dans une zone d'un milieu aquatique consiste à diffuser dans cette zone :

- au moins un élément actif choisi dans un premier groupe comprenant les monoalkyl amines, les dialkyl amines, les trialkyl amines, les polyamines et leurs oxydes,
- au moins un élément actif choisi dans un deuxième groupe comprenant les acides aminés, l'urée et les amides de formule $R-CO-NH_2$ dans laquelle R représente un atome d'hydrogène, un radical alkyle ou le radical $CH_3-CHOH-$,
- éventuellement de l'ammoniac, et
- éventuellement au moins un élément actif choisi dans un troisième groupe comprenant l'acide chlorhydrique, l'acide bromhydrique, l'acide iodhydrique, l'acide sulfurique, l'acide phosphorique, l'acide formique, l'acide myristique, l'acide lactique, l'acide butyrique, l'acide acétique et l'acide caproïque,

l'élément du troisième groupe et/ou les acides aminés du deuxième groupe pouvant être diffusés en combinaison avec l'ammoniac sous forme de sel d'ammonium ; les acides chlorhydrique, bromhydrique, iodhydrique, sulfurique et phosphorique du troisième groupe pouvant être diffusés en combinaison avec les amines et/ou les acides aminés Sous la forme de chlorhydrate, de bromhydrate, d'iodhydrate, de sulfate et/ou de phosphate d'amine ou d'acide aminé ; à condition que l'on diffuse de l'ammoniac dans le milieu aquatique lorsque le ou les éléments du premier groupe sont des trialkyl amines, que l'on diffuse dans le milieu aquatique un élément actif du troisième groupe lorsque l'élément actif du deuxième groupe est un acide aminé, et que la proportion d'éléments actifs du premier groupe et la proportion d'éléments actifs du deuxième groupe diffusés dans le milieu aquatique représentent au moins 5% en mole de l'ensemble des éléments actifs diffusés y compris l'ammoniac.

Dans la composition et le procédé de l'invention, les deux éléments essentiels pour attirer et retenir les poissons sont constitués, d'une part, par une amine et, d'autre part, par une amide et/ou un acide aminé. Toutefois, lorsque l'amine utilisée est une trialkylamine, il est essentiel que le mélange actif comprenne de plus de l'ammoniac car les trialkylamines seules n'agissent pas de façon significative sur les poissons.

En revanche, lorsque l'élément du deuxième groupe est une mono et/ou une dialkylamine, il n'est pas nécessaire d'associer celles-ci à l'ammoniac pour obtenir des résultats satisfaisants. En effet, les mono et les dialkylamines attirent de façon très significative les poissons carnivores comme les thons et les bars, l'action étant plus forte avec les monoalkylamines.

La présence de deux éléments du premier et du deuxième groupes est suffisante pour obtenir une bonne efficacité de la composition. Toutefois, on préfère généralement ajouter au mélange actif un troisième constituant acide qui permet d'ajuster le pH du mélange actif à la valeur voulue, par exemple dans le cas des acides chlorhydrique, bromhydrique, iodhydrique, sulfurique et phosphorique, et/ou d'attirer davantage les poissons dans le cas des acides formique, myristique, lactique, butyrique, acétique et caproïque.

Lorsque l'acide ajouté est l'acide chlorhydrique, bromhydrique, iodhydrique, sulfurique ou phosphorique, on peut l'introduire dans le mélange actif sous forme de combinaison avec l'ammoniac, par exemple sous forme de chlorure d'ammonium, ou sous forme de combinaison avec l'amine ou l'acide aminé, par exemple sous forme de chlorhydrate de l'amine ou de l'acide aminé.

De même, les autres acides peuvent être introduits dans le mélange sous la forme du sel d'ammonium correspondant.

Comme on l'a vu précédemment, les éléments actifs du premier et du deuxième groupes doivent être présents dans le mélange actif en quantité telle que la totalité des éléments actifs du premier groupe représente au moins 5% en mole du mélange et que la totalité des éléments actifs du deuxième groupe représente au moins 5% en mole du mélange. De préférence, la quantité totale d'éléments actifs du premier ou du deuxième groupes ne doit pas excéder 80% en mole du mélange.

Lorsque le mélange actif comprend de l'ammoniac, celui-ci est généralement présent en quantité telle que le rapport molaire amine/ammoniac soit dans la gamme allant de 0,06 à 4. Par ailleurs, la quantité d'ammoniac ne doit pas excéder 80% en mole du mélange actif et de préférence 30% en mole du mélange actif.

Lorsque le mélange actif comprend un élément du troisième groupe tel que l'acide chlorhydrique, l'acide bromhydrique, l'acide iodhydrique, l'acide sulfurique et l'acide phosphorique, celui-ci est généralement ajouté en quantité telle que l'on ajuste le pH du mélange actif à la valeur voulue qui est de préférence celle du milieu aquatique auquel le mélange est destiné afin de faciliter les problèmes de manipulation du mélange et d'introduire dans le milieu aquatique un mélange ayant des caractéristiques proches de celui-ci. Lorsque le milieu aquatique est de l'eau de mer, on ajuste le pH à des valeurs de l'ordre de 7 à 8,5 qui sont généralement celles de l'eau de mer.

Lorsque le mélange actif comprend un élément actif du troisième groupe tel que l'acide formique, l'acide myristique, l'acide lactique, l'acide butyrique, l'acide acétique ou l'acide caproïque, celui-ci est généralement présent en quantité telle qu'il représente de 5 à 50% en mole du mélange. De préférence, cet acide est l'acide lactique, et on l'introduit généralement en mélange équimolaire par rapport à l'amine.

La composition pour attirer et retenir les poissons peut contenir en plus du mélange actif d'autres substances qui peuvent servir de support ou de solvant. ELle peut aussi comprendre d'autres additifs, en particulier d'autres produits connus pour leur capacité à attirer et/ou retenir les poissons, comme par exemple les hormones, les vitamines et les agents favorisant l'appétence des poissons tels que l'anis et la térébenthine. Ces additifs peuvent être choisis en particulier en fonction de la nature du poisson à pêcher.

Les amines susceptibles d'être utilisées comme élément actif dans le mélange de l'invention sont les monoalkylamines, les dialkylamines, les trialkylamines, les polyamines et leurs oxydes, qui présentent une solubilité suffisante dans l'eau, soit une solubilité d'au moins 0,01 mole d'amine ou d'oxyde d'amine par litre d'eau à la température du milieu aquatique auquel le mélange est destiné. A titre d'exemple de tels amines, on peut citer la monométhylamine, la diméthylamine, la triméthylamine, la triéthylamine, les propylamines primaire, secondaire et tertiaire, les butylamines primaire, secondaire et tertiaire, les pentylamines primaire, secondaire et tertiaire, l'hexaméthylène diamine, l'hexaméthylène tétramine et la triéthylène glycol tétramine.

Les acides aminés susceptibles d'être utilisés dans le mélange actif de l'invention sont des acides aminés suffisamment solubles dans l'eau, ayant par exemple une solubilité d'au moins 0,01 mole par litre d'eau à la température du milieu aquatique. On utilise de préférence des acides aminés qui correspondent aux produits de dégradation des tissus de la faune marine, par exemple ceux qui sont laissés à l'état de trace dans le milieu aquatique par des poissons vivants ou morts. A titre d'exemple de tels acides aminés, on peut citer le tryptophane, la lysine, l'arginine, ou la proline. Ces acides aminés peuvent être combinés entre eux ou avec d'autres acides aminés pour être introduits dans le mélange actif. Ainsi, on peut introduire l'arginine sous la forme de glutamate d'arginine.

Les amides de formule $R-CO-NH_2$ susceptibles d'être utilisés comme éléments actifs du deuxième groupe dans le mélange actif de l'invention sont également des amides solubles dans l'eau, ayant par exemple une solubilité d'au moins 20 g/l. A titre d'exemples de tels amides, on peut citer le formamide, le lactamide, le butyramide et les amides des acides myristique et caproïque. De préférence, on utilise l'urée comme élément actif du deuxième groupe car elle est très soluble dans l'eau.

Les compositions de l'invention peuvent être mises en oeuvre sous la forme de solutions, de dispersions, de granulés, de poudres, ou de solutions colloïdales. On peut aussi les inclure sur ou dans divers supports solides inertes vis-à-vis des poissons.

Dans le cas des solutions, on peut dissoudre le mélange actif dans de l'eau et, de préférence, dans le milieu aquatique auquel la composition est destinée, soit généralement dans de l'eau de mer. Dans le cas de dispersions, ou de solutions colloïdales, on peut utiliser pour la réalisation de telles solutions, des produits classiques, par exemple de la gélatine.

Lorsqu'on utilise le mélange actif de l'invention sous la forme d'un produit solide, on peut préparer ce produit par exemple des granulés ou des pastilles, par compression des différents constituants à l'état solide après leur avoir ajouté éventuellement des liants et/ou des excipients. Il est également possible d'enrober les différents constituants du mélange dans un produit soluble ou se délitant dans l'eau.

Les compositions de l'invention peuvent aussi se présenter sous la forme d'un support absorbant ou adsorbant contenant le mélange actif. Celui-ci peut être introduit dans le support à partir d'une solution dans l'eau. On peut aussi utiliser pour cette introduction une solution du mélange actif dans un produit organique peu soluble dans l'eau, tel que l'huile, l'huile de poisson, la paraffine, l'huile de foie de morue, l'huile de térébenthine, la vaseline de façon à obtenir ensuite une diffusion lente du mélange actif dans le milieu aquatique.

On peut aussi utiliser des supports gonflables ou dispersables dans l'eau, tels que l'alumine. Dans le cas d'emploi de supports solides adsorbants ou absorbants, on peut régler le taux de désorption du mélange actif dans le milieu aquatique en choisissant de façon appropriée les caractéristiques du support.

Par ailleurs, on peut choisir des supports solides de densité appropriée, par exemple de densité nettement supérieure à 1, afin de disperser le mélange actif de l'invention à une profondeur suffisante. En effet, en choisissant par exemple un support en poudre de densité appropriée, on peut disperser le mélange actif dans une zone importante du milieu aquatique sans utiliser de grosses quantités de produits actifs.

Enfin, l'utilisation de supports solides permet aussi de diffuser séparément dans le milieu aquatique les différents éléments actifs du mélange. Dans ce cas, on peut utiliser un système comprenant plusieurs supports adsorbants ou absorbants sur chacun desquels est fixé au moins un constituant choisi parmi l'ammoniac et les éléments actifs des premier, deuxième et troisième groupes, lesdits supports ayant des caractéristiques telles que la vitesse de diffusion des éléments actifs et de l'ammoniac dans le milieu aquatique à partir desdits supports corresponde à la diffusion d'un mélange dans lequel les concentrations en éléments actifs du premier et du deuxième groupes représentent chacune au moins 5% en mole du mélange diffusé.

Dans ce cas, chaque support peut ne contenir qu'un seul élément actif du mélange mais on peut aussi utiliser des supports contenant plusieurs éléments actifs à condition de choisir leurs caractéristiques pour obtenir la diffusion dans le milieu aquatique des taux voulus d'éléments actifs.

On peut encore utiliser des supports solides en matière plastique, par exemple des supports adhésifs permettant d'introduire le mélange actif de l'invention autour d'un hameçon, ou encore des supports en mousse de matière plastique à porosité ouverte, par exemple en mousse de polyuréthane, qui peuvent par ailleurs être réalisés sous la forme de leurres.

On peut aussi utiliser comme support du mélange actif de l'invention des matériaux tels que le cuir, les tissus, etc... De tels supports peuvent être imprégnés du mélange actif de l'invention en les immergeant dans des émulsions d'huile de foie de morue contenant le mélange actif.

D'autres caractéristiques et avantages de l'invention apparaîtront mieux à la lecture des exemples suivants.

Dans ces exemples, on a préparé différentes compositions comportant le mélange actif de l'invention et on a testé leur efficacité pour attirer et retenir les poissons dans la mer. Dans tous les exemples, les compositions sont obtenues par dissolution dans 8 litres d'eau de mer des différents éléments du mélange actif. Les quantités (en mole) d'éléments actifs utilisés pour chaque exemple sont indiquées dans le tableau en annexe.

Dans ce tableau, les exemples 6 à 18 et 20 à 34 se rapportent à des compositions de l'invention et les exemples 1 à 5 et 19 sont donnés à titre comparatif et illustrent les résultats obtenus avec des compositions n'entrant pas dans le cadre de l'invention.

Dans chaque exemple, la solution préparée par dissolution des différents éléments actifs dans 8 litres d'eau de mer est introduite dans des réservoirs flottants, qui sont munis d'embouts rigides débouchant dans l'eau de mer à une profondeur d'environ 80 cm. Après avoir repéré un amas de poissons relativement important, on place trois réservoirs de ce type à 100 mètres les uns des autres et à une distance 100 à 200 mètre de l'amas de poissons, de manière que le courant qui passe sur les bouées associées aux réservoirs atteigne les environs immédiats de l'amas de poissons. Les bouées ne sont pas disposées sur une même ligne de courant, de manière à ce que les émissions des réservoirs ne se mélangent pas avant d'avoir atteint l'amas de poissons. Bien entendu, on s'est assuré auparavant de l'absence de poissons au voisinage des réservoirs flottants et des bouées.

Après mise en place de ces réservoirs, on instille dans l'eau de mer à un débit quasi constant (d'environ 0,13 à 0,26 l/min.) la solution contenue dans chacun des réservoirs, puis l'on détecte la présence ou l'absence de poissons à proximité immédiate de chacun des réservoirs, en utilisant un bâteau allant de l'un à l'autre et un sondeur enregistreur de type SKIPER 417 de CRM qui émet à 50 kHz à l'intérieur d'un cône de 25° d'ouverture. Cet appareil est extrêmement sensible et permet de détecter très facilement les poissons et d'apprécier à la fois leur taille et l'importance de leur concentration.

Les résultats obtenus avec chacune des compositions sont donnés dans le tableau joint où le signe - indique un résultat négatif et le signe + un résultat positif, qui peut aller de 1 + à 5 +, 5 + représentant le maximum de poissons attirés et retenus.

Au vu de ces résultats, on constate que les compositions des exemples 1 à 5 qui ne comportent pas d'élément actif du deuxième groupe, n'ont pu donner un résultat satisfaisant et qu'il en est de même dans le cas de l'exemple 19 où la triméthylamine a été utilisée seule sans être associée à de l'ammoniac.

En revanche, les compositions 6 à 18 à base d'ammoniac, d'amine, d'acide lactique, de lysine et/ou d'urée ont donné de bons résultats.

De même, les compositions 20 à 34 ont donné des résultats satisfaisants.

Ainsi, on constate que le fait de remplacer l'ammoniac par le chlorure d'ammonium ne modifie pas l'efficacité de la composition.

Ceci laisse supposer que ce sont les ions plutôt que les molécules qui ont une influence prépondérante sur le sens gustatif des poissons. En effet, dans le milieu marin, les éléments actifs sont en solution aqueuse quasi infinie, en présence d'une quantité significative de chlorure de sodium et leur ionisation est quasi totale. C'est pourquoi les éléments actifs peuvent être introduits sous forme de sels, de chlorhydrates, bromhydrates, iodhydrates, phosphates et/ou sulfates.

Ainsi, les compositions de l'invention ont une très bonne efficacité et on peut envisager de les utiliser pour la pêche en les associant à des instruments de capture appropriés, par exemple pour la pêche au carrelet, pour la pêche à l'aide de nasses, pour la pêche à la traîne, pour la pêche aux hameçons et pour la pêche avec des filets.

Dans le cas de la pêche au carrelet, on peut disposer les compositions à proximité du carrelet en utilisant des flacons munis d'ouvertures permettant de diffuser la composition dans l'eau de mer à un débit approprié après avoir ancré le bateau. Lorsque l'amas de poissons attirés est suffisant, on remonte alors le carrelet.

Dans le cas de la pêche à l'aide de nasses, on dispose la composition de l'invention dans un réservoir fixé dans la nasse et on régle le débit de diffusion à une valeur très faible.

Dans le cas de la pêche à la traîne, on utilise des leurres classiques constitués par des tubes de caoutchouc souple que l'on remplit des compositions de l'invention en les obturant par une membrane en matériau capable de diffuser lentement la composition. On peut aussi utiliser des morceaux de cuir imprégnés et ceci peut conduire à de bons résultats.

Dans le cas de la pêche à l'aide de filets, on dispose les filets autour d'une bouée munie d'un réservoir contenant le mélange actif de l'invention qui est ainsi distillé dans l'eau de mer au voisinage des filets à un débit approprié.

Ainsi, les compositions de l'invention sont très intéressantes car elles sont efficaces, faciles à réaliser, peu onéreuses et utilisables avec différentes techniques de pêche.

T A B L E A U

| EXEMPLES | 1 | 2 | 3 | 4 | 5 | 6 | 7 | 8 | 9 | 10 | 11 | 12 | 13 |
|---|---|---|---|---|---|---|---|---|---|---|---|---|---|
| AMMONIAC | 6 | 6 | 6 | 3 | | 6 | 6 | 6 | 3 | 6 | 6 | 3 | |
| MONOMETHYLAMINE | | | 6 | | 3 | | | 6 | | | 6 | | 6 |
| DIMETHYLAMINE | | 6 | | 6 | | | 6 | | 6 | | | 6 | |
| TRIMETHALAMINE | 6 | | | | 3 | 6 | | | | 6 | | | 3 |
| TRIETHYLAMINE | | | | | | | | | | | | | |
| ACIDE LACTIQUE | 6 | 6 | 6 | 6 | 6 | 6 | 6 | 6 | 6 | 6 | 6 | 6 | 6 |
| LYSINE | | | | | | 4 | 4 | 4 | 4 | | | | |
| UREE | | | | | | | | | | 6 | 6 | 6 | 6 |
| RESULTATS | - | - | - | - | - | +++ | ++ | ++++ | +++ | +++ | ++++ | ++++ | ++++ |

T A B L E A U   (suite)

| EXEMPLES | 14 | 15 | 16 | 17 | 18 | 19 | 20 | 21 | 22 | 23 | 24 |
|---|---|---|---|---|---|---|---|---|---|---|---|
| AMMONIAC | 6 | 6 | 6 | 6 | 3 | | 6 | 6 | 6 | | |
| MONOMETHYLAMINE | 6 | | | 6 | | | 6 | | | 3 | 3 |
| DIMETHYLAMINE | | 6 | | | 6 | | | 3 | | | 3 |
| TRIMETHYLAMINE | | | 6 | | | 3 | | | 6 | 3 | |
| TRIETHYLAMINE | | | | | | | | | | | |
| ACIDE LACTIQUE | 6 | 6 | 6 | 6 | 6 | 6 | | | | | |
| LYSINE | | 2 | 2 | 2 | 2 | 2 | | | | | |
| UREE | 3 | 3 | 3 | 3 | 3 | 3 | 6 | 6 | 6 | 6 | 6 |
| RESULTATS | ++++ | +++++ | ++++ | ++++ | ++++ | − | +++ | + | ++ | ++ | ++ |

9

TABLEAU (suite)

| EXEMPLES | 25 | 26 | 27 | 28 | 29 | 30 | 31 | 32 | 33 | 34 |
|---|---|---|---|---|---|---|---|---|---|---|
| AMMONIAC | 6 | 6 | 6 | 6 | 6 | 6 | 6 | 6 | 6 | |
| CHLORURE D'AMMONIUM | 3 | 3 | | | | | | | | 6 |
| MONOMETHYLAMINE | | | | 6 | | | | | | |
| DIMETHYLAMINE | | | | | 6 | 6 | 6 | | | |
| TRIMETHYLAMINE | | | 6 | | | | | 6 | 6 | 6 |
| TRIETHYLAMINE | | | | | | | | | | |
| ACIDES CHLORHYDRIQUE | | | | | | | | | | |
| LACTIQUE | | | | 6 | 6 | 6 | 6 | 6 | | 6 |
| UREE | 6 | 6 | 6 | 6 | 6 | 6 | 6 | 6 | 6 | 6 |
| RESULTATS | +++ | ++ | ++++ | ++ | +++ | ++ | +++++ | ++++ | +++ | ++++ |

**Revendications**

1. Composition pour attirer et retenir les poissons dans une zone d'un milieu aquatique, caractérisée en ce qu'elle consiste en un mélange actif constitué par :

- au moins un élément actif choisi dans un premier groupe comprenant les monoalkylamines, les dialkylamines, les trialkylamines, les polyamines et leurs oxydes ;
- au moins un élément actif choisi dans un deuxième groupe comprenant les acides aminés, l'urée et les amides de formule R-CO-NH$_2$ dans laquelle R représente un atome d'hydrogène, un radical alkyle ou le radical CH$_3$-CHOH ;
- éventuellement de l'ammoniac ; et
- éventuellement au moins un élément actif choisi dans un troisième groupe comprenant l'acide chlorhydrique, l'acide bromhydrique, l'acide iodhydrique, l'acide sulfurique, l'acide phosphorique, l'acide formique, l'acide myristique, l'acide lactique, l'acide butyrique, l'acide acétique et l'acide caproïque ; l'élément du troisième groupe et/ou les acides aminés du deuxième groupe pouvant être combinés au moins en partie avec l'ammoniac sous la forme de sel d'ammonium, et les acides chlorhydrique, bromhydrique, iodhydrique, sulfurique et phosphorique du troisième groupe pouvant être combinés au moins en partie avec les amines et/ou les acides aminés et être présents de ce fait dans le mélange actif sous la forme de chlorhydrate, de bromhydrate, d'iodhydrate, de sulfate et/ou de phosphate d'amine ou d'acide aminé ;

le mélange actif comprenant de l'ammoniac lorsque l'élément du premier groupe est une trialkylamine, le mélange actif comprenant au moins un élément actif du troisième groupe lorsque l'élément actif du deuxième groupe est un acide aminé, le ou les éléments actifs appartenant au premier groupe représentant au moins 5% en mole du mélange actif, le ou les éléments actifs appartenant au deuxième groupe représentant au moins 5% en mole du mélange actif, et l'ammoniac représentant au plus 80% en mole du mélange actif.

2. Composition selon la revendication 1, caractérisée en ce qu'elle comprend un élément du troisième groupe choisi parmi les acides chlorhydrique, bromhydrique, iodhydrique, sulfurique et phosphorique en quantité telle que le pH du mélange actif est voisin de celui du milieu aquatique.

3. Composition selon l'une quelconque des revendications 1 et 2, caractérisée en ce que le ou les éléments du premier groupe sont choisis parmi la monométhylamine, la diméthylamine, la triméthylamine et la triéthylamine, l'hexaméthylène diamine et l'hexaméthylène tétramine.

4. Composition selon l'une quelconque des revendications 1 à 3, caractérisée en ce que l'élément actif du deuxième groupe est l'urée.

5. Composition selon l'une quelconque des revendications 1 à 4, caractérisée en ce que l'acide aminé est la lysine, l'acide glutamique et/ou l'arginine.

6. Composition selon l'une quelconque des revendications 1 à 5, caractérisée en ce que l'élément du troisième groupe est l'acide chlorhydrique et/ou l'acide lactique.

7. Procédé pour attirer et retenir les poissons dans une zone d'un milieu aquatique, caractérisé en ce qu'il consiste à diffuser dans cette zone :
- au moins un élément actif choisi dans un premier groupe comprenant les monoalkylamines, les dialkylamines, les trialkylamines, les polyamines et leurs oxydes,
- au moins un élément actif choisi dans un deuxième groupe comprenant les acides aminés, l'urée et les amides de formule R-CO-NH$_2$ dans laquelle R représente un atome d'hydrogène, un radical alkyle ou le radical CH$_3$-CHOH-,
- éventuellement de l'ammoniac, et
- éventuellement au moins un élément actif choisi dans un troisième groupe comprenant l'acide chlorhydrique, l'acide bromhydrique, l'acide iodhydrique, l'acide sulfurique, l'acide phosphorique, l'acide formique, l'acide myristique, l'acide lactique, l'acide butyrique, l'acide acétique et l'acide caproïque ;

l'élément du troisième groupe et/ou les acides aminés du deuxième groupe pouvant être diffusés en combinaison avec l'ammoniac sous forme de sel d'ammonium ; les acides chlorhydrique, bromhydrique, iodhydrique, sulfurique et phosphorique du troisième groupe pouvant être diffusés en combinaison avec les amines et/ou les acides aminés sous la forme de chlorhydrate, de bromhydrate, d'iodhydrate, de sulfate et/ou de phosphate d'amine ou d'acide aminé, à condition que l'on diffuse de l'ammoniac dans le milieu aquatique lorsque le ou les éléments du premier groupe sont des trialkylamines, que l'on diffuse dans le milieu aquatique un élément actif du troisième groupe lorsque l'élément actif du deuxième groupe est un acide aminé et que la proportion d'éléments actifs du premier groupe et la proportion d'éléments actifs du deuxième groupe diffusés dans le milieu aquatique représentent au moins 5% en mole de l'ensemble des éléments actifs diffusés y compris l'ammoniac.

8. Système pour la mise en oeuvre du procédé selon la revendication 7, caractérisé en ce qu'il comprend plusieurs supports adsorbants ou absorbants sur chacun desquels est fixé au moins un constituant choisi parmi l'ammoniac et les éléments actifs des premier, deuxième et troisième groupes, lesdits supports ayant des caractéristiques telles que la vitesse de diffusion des éléments actifs et de l'ammoniac dans le milieu aquatique à partir desdits supports corresponde à la diffusion d'un mélange dans lequel les concentrations en éléments actifs du premier et du deuxième groupes représentent chacune au moins 5% en mole du mélange diffusé.

## Claims

1. Composition for attracting and retaining fish in an area of an aquatic medium, characterized in that it consists of an active mixture constituted by at least one active element chosen from a first group comprising monoalkylamines, dialkylamines, trialkylamines, polyamines and their oxides; at least one active element chosen from a second group comprising the amino acids, urea and amides of formula $R\text{-}CO\text{-}NH_2$, in which R represents a hydrogen atom, an alkyl radical or the radical $CH_3\text{-}CHOH$; optionally ammonia; and optionally at least one active element chosen from among a third group comprising hydrochloric, hydrobromic, hydroiodic, sulphuric, phosphoric, formic, myristic, lactic, butyric, acetic and caproic acids; whereby the element of the third group and/or the amino acids of the second group can at least partly be combined with ammonia in the form of ammonium salt and the hydrochloric, hydrobromic, hydroiodic, sulphuric and phosphoric acids of the third group can be combined at least partly with the amines and/or amino acids and can therefore be present in the active mixture in the form of hydrochloride, hydrobromide, hydroiodide, sulphate and/or phosphate of amine or amino acid; the active mixture including ammonia when the element of the first group is a trialkylamine, the active element incorporating at least one active element of the third group when the active element of the second group is an amino acid, the active element or elements belonging to the first group representing at least 5 molar % of the active mixture, the active element or elements belonging to the second group representing at least 5 molar % of the active mixture and the ammonia representing at the most 80 molar % of the active mixture.

2. Composition according to claim 1, characterized in that it comprises an element of the third group chosen from among hydrochloric, hydrobromic, hydroiodic, sulphuric and phosphoric acids in a quantity such that the pH of the active mixture is close to that of the aquatic medium.

3. Composition according to either of the claims 1 and 2, characterized in that the element or elements of the first group are chosen from among monomethylamine, dimethylamine, triethylamine, hexamethylene diamine and hexamethylene tetramine.

4. Composition according to any one of the claims 1 to 3, characterized in that the active element of the second group is urea.

5. Composition according to any one of the claims 1 to 4, characterized in that the amino acid is lysine, glutamic acid and/or arginine.

6. Composition according to any one of the claims 1 to 5, characterized in that the element of the third group is hydrochloric and/or lactic acid.

7. Process for attracting and retaining fish in an area of an aquatic medium, characterized in that it consists of diffusing into said area at least one active element chosen from a first group including monoalkylamines, dialkylamines, trialkylamines, polyamines and their oxides; at least one active element chosen from a second group including amino acids, urea and amides of formula $R\text{-}CO\text{-}NH_2$, in which R represents a hydrogen atom, an alkyl radical or the radical $CH_3\text{-}CHOH\text{-}$; optionally ammonia; and optionally at least one active element chosen from a third group comprising hydrochloric, hydrobromic, hydroiodic, sulphuric, phosphoric, formic, myristic, lactic, butyric, acetic and caproic acids; the element of the third group and/or the amino acids of the second group being diffusible in combination with the ammonia in the form of ammonium salt, the hydrochloric, hydrobromic, hydroiodic, sulphuric and phosphoric acids of the third group being diffusible in combination with the amines and/or amino acids in the form of hydrochloride, hydrobromide, hydroiodide, sulphate and/or phosphate of amine or amino acid; provided that ammonia is diffused into the aquatic medium when the element or elements of the first group are trialkylamines, that an active element of the third group is diffused into the aquatic element of the second group is an amino acid and that the proportion of active elements of the first group and the proportion of active elements of the second group diffused into the aquatic medium represent at least 5 molar % of the total of the diffused active elements, including the ammonia.

8. System for performing the process according to claim 7, characterized in that it comprises several adsorbing to absorbing supports on each of which is fixed at least one constituent chosen from among ammonia and active elements of the first, second and third groups, said supports having characteristics such that the diffusion rate of the active elements and the ammonia in aquatic medium from said supports corresponds to the diffusion of a mixture in which the concentrations of active elements of the first and second groups each represent at least 5 molar % of the diffused mixture.

**Patentansprüche**

1. Zusammensetzung zum Ködern und Festhalten von Fischen in einer wasserhaltigen Umgebung, dadurch gekennzeichnet, daß sie aus einer aktiven Mischung besteht, die gebildet ist aus:

   wenigstens einem aktiven Element, das aus einer ersten Gruppe ausgewählt ist, die Monoalkylamine, die Dialkylamine, die Trialkylamine, die Polyamine und ihre Oxide enthält;

   wenigstens ein aktives Element, das aus einer zweiten Gruppe ausgewählt ist, das die Aminosäuren, Harnstoff und die Amide der Formel $R-CO-NH_2$ enthält, in dem R ein Wasserstoffatom, ein Alkylradikal oder das Radikal $CH_3-CHOH$ ist;

   gegebenenfalls Ammoniak; und

   gegebenenfalls wenigstens ein aktives Element, das aus einer dritten Gruppe ausgewählt ist, die Salzsäure, Bromwasserstoffsäure, Jodwasserstoffsäure, Schwefelsäure, Phosphorsäure, Ameisensäure, Myristinsäure, Milchsäure, Buttersäure, Essigsäure, Capronsäure enthält; wobei das Element der dritte Gruppe und/oder die Aminosäuren der zweiten Gruppe kombiniert oder wenigstens teilweise mit Ammoniak in Form eines Ammoniumsalzes kombiniert sein können und die Salzsäure, Bromwasserstoffsäure, Jodwasserstoffsäure, Schwefelsäure und Phosphorsäure der dritten Gruppe wenigstens teilweise mit den Aminen und/oder den Aminosäuren kombiniert sein können und aufgrund dieser Tatsache in dem aktiven Gemisch in Form von Chlorhydrat, Bromhydrat, Jodhydrat, Sulfat und/oder Phosphat des Amins oder der Aminosäure vorhanden sein können;

   das aktive Gemisch Ammoniak enthält, wenn das Element der ersten Gruppe ein Trialkylamin ist, das aktive Gemisch wenigstens ein aktives Element der dritten Gruppe enthält, wenn das aktive Element der zweiten Gruppe eine Aminosäure ist, das oder die aktiven Element, die in der ersten Gruppe auftreten, wenigstens fünf Mol-% des aktiven Gemischs ausmachen, das oder die aktiven Elemente, die in der zweiten Gruppe erscheinen, wenigstens fünf Mol-% des aktiven Gemischs ausmachen und das Ammoniak höchstens 80 Mol-% des aktiven Gemischs ausmacht.

2. Zusammensetzung nach Anspruch 1, dadurch gekennzeichnet, daß sie ein Element der dritten Gruppe enthält, das ausgewählt ist aus Salzsäure, Bromwasserstoffsäure, Jodwasserstoffsäure, Salzsäure und Phosphorsäure und dessen Menge derart ist, daß das pH des aktiven Gemischs nahe bei dem der wässrigen Umgebung ist.

3. Zusammensetzung nach einem der Ansprüche 1 und 2, dadurch gekennzeichnet, daß das oder die Elemente der ersten Gruppe ausgewählt sind aus dem Monomethylamin, dem Dimethylamin, dem Trimethylamin und dem Triethylamin, dem Hexamethylendiamin und dem Hexamethylentetramin.

4. Zusammensetzung nach einem der Ansprüche 1 bis 3, dadurch gekennzeichnet, daß das aktive

EP 0 219 416 B1

Element der zweiten Gruppe Harnstoff ist.

5. Zusammensetzung nach einem der Ansprüche 1 bis 4, dadurch gekennzeichnet, daß die Aminosäure Lysin, Glutaminsäure und/oder Arginin ist.

6. Zusammensetzung nach einem der Ansprüche 1 bis 4, dadurch gekennzeichnet, daß das Element der dritten Gruppe Salzsäure und/oder Milchsäure ist.

7. Verfahren zum Ködern und Festhalten von Fischen in einer wasserhaltigen Umgebung, dadurch gekennzeichnet, daß es darin besteht, in dieser Umgebung zu verteilen:

wenigstens einem aktiven Element, das aus einer ersten Gruppe ausgewählt ist, die Monoalkylamine, die Dialkyamine, die Trialkylamine, die Polyamine und ihre Oxide enthält;

wenigstens ein aktives Element, das aus einer zweiten Gruppe ausgewählt ist, das die Aminosäuren, Harnstoff und die Amide der Formel $R\text{-}CO\text{-}NH_2$ enthält, in dem R ein Wasserstoffatom, ein Alkylradikal oder das Radikal $CH_3\text{-}CHOH$ ist;

gegebenenfalls Ammoniak; und

gegebenenfalls wenigstens ein aktives Element, das aus einer dritten Gruppe ausgewählt ist, die Salzsäure, Bromwasserstoffsäure, Jodwasserstoffsäure, Schwefelsäure, Phosphorsäure, Ameisensäure, Myristinsäure, Milchsäure, Buttersäure, Essigsäure, Capronsäure enthält; wobei das Element der dritten Gruppe und/oder die Aminosäuren der zweiten Gruppe kombiniert oder wenigstens teilweise mit Ammoniak in Form eines Ammoniumsalzes kombiniert sein können und die Salzsäure, Bromwasserstoffsäure, Jodwasserstoffsäure, Schwefelsäure und Phosphorsäure der dritten Gruppe wenigstens teilweise mit den Aminen und/oder den Aminosäuren kombiniert sein können und aufgrund dieser Tatsache in dem aktiven Gemisch in Form von Chlorhydrat, Bromhydrat, Jodhydrat, Sulfat und/oder Phosphat des Amins oder der Aminosäure vorhanden sein können;

wobei das Element der dritten Gruppe und/oder die Aminosäuren der zweiten Gruppe in Kombination mit Ammoniak in Form eines Ammoniumsalzes verteilt werden können; die Salzsäure, Bromwasserstoffsäure, Jodsäure, Schwefelsäure und Phosphorsäure der dritten Gruppe in Kombination mit den Aminen und/oder den Aminosäuren in Form von Chlorhydrat, Bromhydrat, Jodhydrat, Sulfat und/oder Phosphat des Amins oder der Aminosäure verteilt werden können, sofern man das Amoniak in der wässrigen Umgebung verteilt, wenn das oder die Elemente der ersten Gruppe Trialkylamine sind, das man in der wässrigen Umgebung ein aktives Element der dritten Gruppe verteilt, wenn das aktive Element der zweiten Gruppe eine Aminosäure ist, und daß der steil der aktiven Elemente der ersten Gruppe und der Anteil der aktiven Elemente der zweiten Gruppe, die in der wässrigen Umgebung verteilt werden, wenigstens fünf Mol-% der Gesamtheit der aktiven Elemente ausmachen, die verteilt werden, einschließlich des Ammoniaks.

8. System zur Ausführung des Verfahrens nach Anspruch 7, dadurch gekennzeichnet, daß es mehrere adsorbierende oder absorbierende Träger enthält, auf denen jeweils wenigstens ein Bestandteil befestigt ist, der unter Ammoniak und den aktiven Elementen der ersten, zweiten und dritten Gruppen ausgewählt ist, wobei die Träger solche Eigenschaften aufweisen, daß die Diffusionsgeschwindigkeit der aktiven Elemente des Ammoniaks in wässriger Umgebung von diesen Trägern ausgehend der Diffusion eines Gemischs entspricht, in dem die Konzentrationen der aktiven Elemente der ersten und der zweiten Gruppen jeweils wenigstens fünf Mol-% des verteilten Gemischs ausmachen.

14